# EUROPEAN PATENT SPECIFICATION

(11) **EP 3 419 440 B1**
(45) Date of publication and mention of the grant of the patent: **01.01.2020**
(21) Application number: 17715248.5
(22) Date of filing: 27.02.2017
(51) Int. Cl.: A23N 3/04, A23N 4/12, A23N 15/06

(54) **VEGETABLE CORING MACHINE**
KERNBOHRMASCHINE FÜR GEMÜSE
MACHINE D'EXTRACTION DE TROGNON DE LÉGUME

(30) Priority: 25.02.2016 GB 201603278
(43) Date of publication of application: 02.01.2019
(73) Proprietor: S K Chilled Foods Limited, Billingham, Cleveland TS22 5TB (GB)
(72) Inventor: JACKSON, Paul Alan, Stockton-on-Tees Cleveland TS18 5BL (GB)
(74) Representative: Elsworth, Dominic Stephen
(86) International application number: PCT/GB2017/050512
(87) International publication number: WO 2017/144920

(56) References cited:
- WO-A1-91/07883
- KR-A- 20130 010 215
- US-A- 3 036 612
- US-A- 4 865 860

## Description

### Field of the Invention

The present invention relates to vegetable coring devices, and in particular to a vegetable coring device that uses a rotating knife to remove a core from a vegetable part.

### Background of the Invention

In the food processing industry there is a requirement for coring vegetables. In the case of potatoes, there is a market for potato skins, which are then filled with another food ingredient to create a food product.

In order to prepare a potato to become a filled potato skin, after washing the potato is cooked, for example by baking. The potato is then halved and the core is removed manually. A worker holds a cooked potato half in one hand and a knife with a curved blade in the other hand. The worker pulls the blade through the potato half to separate the core from the potato skin. The potato skin is then fried. The core may be used in other food products, animal feed or be disposed of as waste.

The current process for producing potato skins suffers from a number of problems. First, because the process is manual there is considerable variability in the amount of potato removed from one potato to another. This presents a problem when filling the skin. If the same quantity of filling is placed in each potato skin, one may appear over filled and another under filled. Alternatively, the amount of filling must be optimised for each potato skin, which adds complexity to the process and may increase costs.

Second, because the potato is cooked prior to frying the potato skin takes on a considerable amount of oil during the frying process and hence the resulting potato skin has a significant fat content.

If the process for filling potatoes could be mechanised it may be possible to address some of the problems identified above.

One attempt to mechanise the coring of potatoes is described in US 5,102,678. In this patent a potato is held by a gripping tool and is forced towards a V-shaped blade. The V-shaped blade cuts the potato into two halves. Each wall of the V-shaped blade includes an opening. A curved blade mounted on a shaft is situated within the V of the V-shaped blade and is configured so that the blade passes into and out of the opening in each of the walls of the V-shaped blade, thereby removing a core from the potato half. During the coring operation, each potato half is held in place by the gripping tool and a plate which presses the potato half up against the outside face of a respective one of the walls of the V-shaped blade.

In US 5,102,678 the halving and coring of the potato is performed in a two step operation by the same machine. Output is therefore limited to the speed of the slowest step of the process. Further, certain parts of the machine, namely the gripping tool has to grip the potato or potato half during both steps of the process and is not optimised for both steps. The gripping requirement for the halving step requires the axial force exerted by the blade on the potato to be resisted, whereas the coring step requires a rotational force to be resisted.

US3036612 describes food processing apparatus for automatically coring tomatoes and various other produce comprising rotary coring knife means and a continuous loop conveyor.

KR20130010215 describes apparatus for separating seed from fruit such as plums. The apparatus includes pins which push the seeds out of the fruit.

It would be desirable to provide an improved vegetable coring and in particular an improved coring machine for coring potato halves.

It would also be desirable to produce a cooked potato skin or potato skin ready to cook having a lower fat content than potato skins presently available.

### Summary of the Invention

According to a first aspect of the invention there is provided an apparatus for removing a part from a vegetable piece, the apparatus comprising:
a conveyor including a plurality of vegetable support elements, each vegetable support element comprising at least one opening therein;
a vegetable securing mechanism situated above the conveyor and including means to secure a vegetable piece in position over the at least one opening such that the centre of the at least one opening and the centre of the vegetable piece are substantially aligned; and
a cutting mechanism including at least one cutting blade aligned with the at least one opening in one of the plurality of vegetable support elements, and configured to pass through the at least one opening from below the vegetable support elements;
a drive means driving the vegetable support elements of the conveyor towards the vegetable securing and cutting mechanisms;
timing means configured to advance the conveyor in steps of pre-defined distances and to halt forward movement of the conveyor for predetermined periods of time with the centre of the opening of the vegetable support element substantially aligned with a central axis of the vegetable securing mechanism, and to control the actuation of the vegetable securing mechanism and cutting mechanism to:
   i) secure a vegetable piece in position on the vegetable support element;
   ii) activate the cutting mechanism to move through a cutting cycle;
   iii) to release the vegetable piece from the vegetable securing mechanism; and
   iv) move the conveyor through another step.

The vegetable support element may comprise a plate, the or each opening extending through the plate.

Preferably, the or each plate has a thickness and the or each opening is situated in a recess in the plate where the thickness thereof is reduced relative to the thickness of the plate adjacent to the recess.

The vegetable securing means may be mounted on a frame and wherein the vegetable securing means is movable relative to the frame towards any away from the conveyor in a plane substantially perpendicular to the surface of the conveyor.

Preferably, the frame mounts an actuator, the actuator attached to the vegetable securing means, extension and retraction of the actuator moving the vegetable securing means towards and away from the frame.

Advantageously, the vegetable securing mechanism includes first vegetable piece engaging members moveable in a plane parallel to the surface of the conveyor.

Preferably, the vegetable piece securing mechanism includes at least one actuator configured to move the first vegetable piece engaging members in the plane parallel to the surface of the conveyor.

The first vegetable piece engaging members may be mounted on a first support and the actuator is configure to move the first support in the plane parallel to the surface of the conveyor.

Advantageously, the first vegetable piece engaging members are mounted on the first support movably between extended and retracted positions and are biased to the extended position (by at least one resilient element).

Preferably, the vegetable securing mechanism includes at least one second vegetable piece engaging member moveable towards and away from the conveyor in a direction substantially perpendicular to the surface of the conveyor.

The vegetable piece securing mechanism may include at least one actuator configured to move the second vegetable piece engaging members in the plane substantially perpendicular to the surface of the conveyor.

Preferably, the at least one second vegetable piece engaging member is mounted on a second support, which second support is attached to the frame.

Preferably, the vegetable piece securing mechanism includes at least one actuator configured to move the second vegetable piece engaging members relative to the second support in the plane parallel to the surface of the conveyor.

Preferably, the second vegetable piece engaging members are mounted on the second support movably between extended and retracted positions and are biased to the extended position (by at least one resilient element).

The cutting mechanism may include a shaft and the at least one cutting blade is mounted on the shaft and may comprise a plurality of cutting blades and wherein the cutting blades are mounted on the shaft and aligned on the same radial axis of the shaft or are mounted on the shaft on different radial axes of the shaft.

Advantageously, wherein the drive means includes elements that may be synchronised with one another.

The elements may include toothed gear wheels, cogs, chains, toothed pulley wheels and toothed belts.

The drive means may include a motor, which motor may be selected from the group comprising: an electric motor, a stepper motor, and a servo operated motor.

The timing means may be electronic, mechanical or electro-mechanical (mechanical to include hydraulic and pneumatic).

Preferably, the timing means includes at least one position sensor associated with at least one of the conveyor, the vegetable securing mechanism, the cutting mechanism and the drive means and wherein the timing means is configured to receive signals from the position sensor.

Advantageously, at least one position sensor is associated with each of the conveyor, the vegetable securing mechanism, the cutting mechanism and the drive means.

According to another aspect of the invention there is provided a method of removing a part from a vegetable piece using an apparatus of the first aspect of the invention and comprising the steps of:
i) holding the conveyor stationary for a period;
ii) placing at least one vegetable piece on the support element, the or each vegetable piece placed over a respective opening in the support element;
iii) advancing the conveyor such that the or each opening of the support element with vegetable pieces thereon is situated such that the centre of each opening lies on a substantially common axis with the vegetable piece securing mechanism and the cutting mechanism and halting the conveyor and holding said conveyor stationary for the period of time;
iv) activating the vegetable piece securing mechanism to secure the or each vegetable piece in a substantially centred position over the opening;
v) activating the cutting mechanism to cut a part of the vegetable piece therefrom;
vi) releasing the vegetable piece securing mechanism;
vii) in the period where the conveyor is held stationary, repeating step ii for the next support element;
vii) repeating steps iii to vii.

Preferably, one of the first and second vegetable piece engaging members engages the vegetable piece in advance of the other.

### Brief Description of the Drawings

In there Drawings, which illustrate preferred embodiments of an apparatus for removing a part from a vegetable piece of the invention:
Figure 1 is a schematic cross-sectional side view of the apparatus;
Figure 2 is schematic representation of the apparatus shown in Figure 1 ;
Figure 3 is a schematic detail view showing the vegetable piece securing mechanism in a first configuration;
Figure 4 is the view shown in Figure 3, with the vegetable piece securing mechanism in a second configuration;
Figure 5a is a schematic representation from the underside of the vegetable piece securing mechanism removed from the whole apparatus;
Figure 5b is a schematic representation of the vegetable securing mechanism removed from the whole apparatus viewed from above;
Figure 6 is a schematic detail view showing a part of the conveyor and the coring blades;
Figure 7 is a schematic detail view showing the vegetable exit end of the conveyor;
Figure 8 is a schematic representation of first type of conveyor plate;
Figure 9 is a schematic representation of a second type of conveyor plate;
Figure 10 is a schematic representation of the knife assembly of the invention;
Figure 11 is a front view of the knife assembly illustrated in Figure 10;
Figure 12 illustrates an apparatus for applying a coating to the cored potato halves exiting the apparatus illustrated in Figures 1 to 11.

### Detailed Description of the Preferred Embodiments

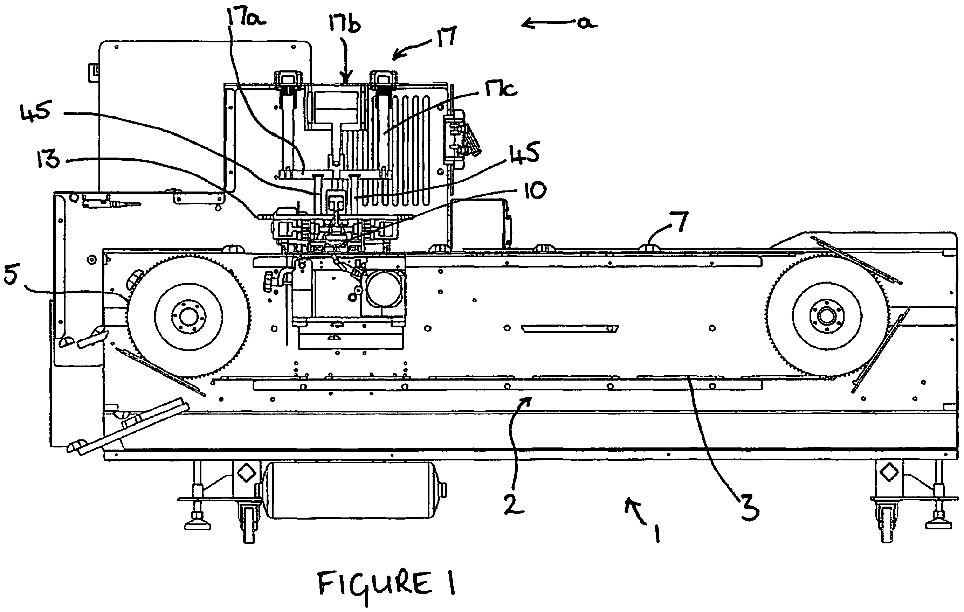

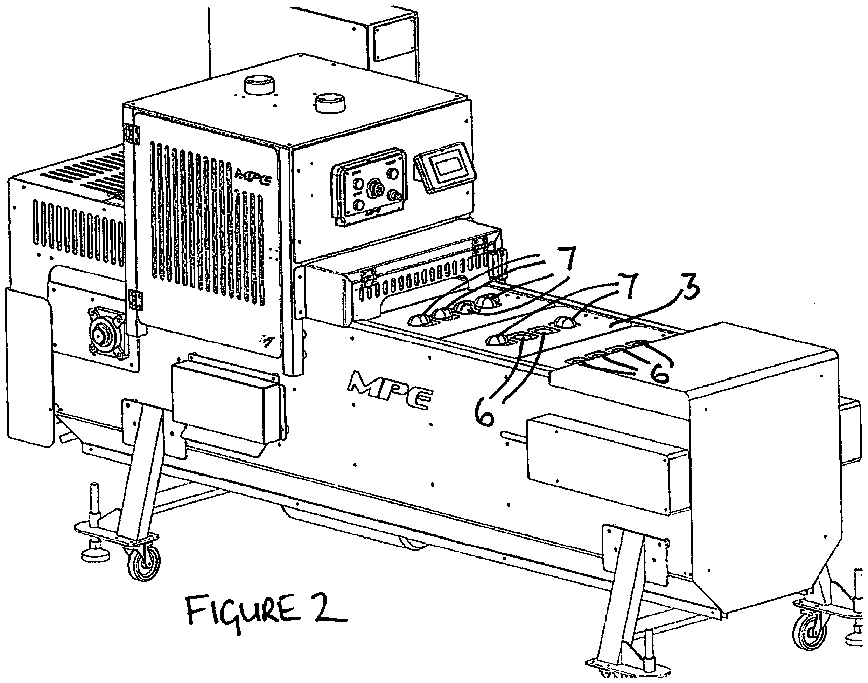

Referring now to Figures 1 and 2, an apparatus 1 for removing a part from a vegetable piece includes a conveyor 2 formed of a plurality of conveyor plates 3 attached to a common chain (not shown). The chain extends around cog wheels 5 located at each end of the apparatus 1 (only the cog wheel 5 at one end of the apparatus 1 is shown in Figure 1).

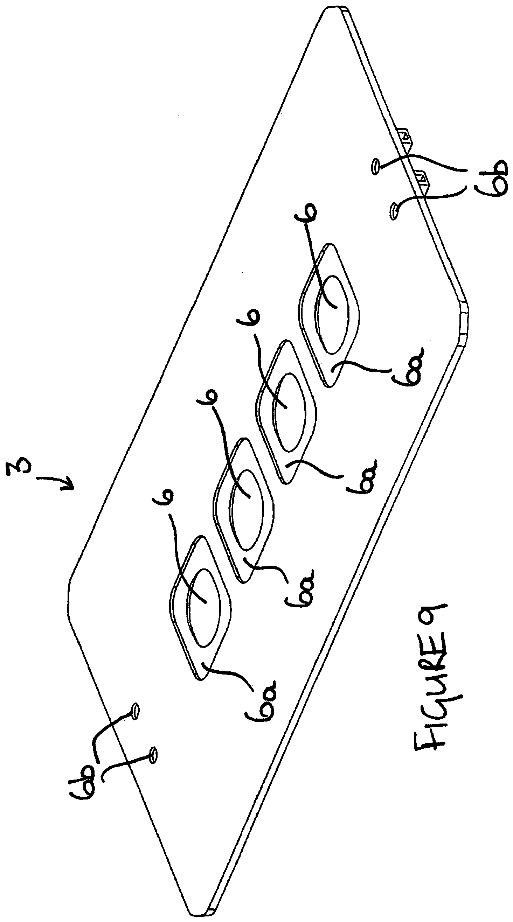

Each of the conveyor plates 3 includes four openings 6. Workers situate themselves to one or both sides of apparatus 1 in the region where the conveyor plates 3 are open. Workers physically place a potato half 7 over the opening 6. The type of conveyor plate 3 used in the apparatus 1 of Figure 2 is of the type shown in Figure 9 and described in greater detail below.

Whilst the potato halves may be placed on the conveyor plates 3 over the openings 6 manually, it is conceivable that the potato halves could be positioned using a machine of some type.

The conveyor 2 moves in steps, that is the conveyor 2 moves along by a certain fixed distance, typically the length of one of the plates, in the longitudinal direction "a" and then is halted for a defined period. During that period, the potato halves may be placed on one of the conveyor plates 3, each potato half over one of the openings 6.

Also, while the conveyor is halted the core removal operation occurs.

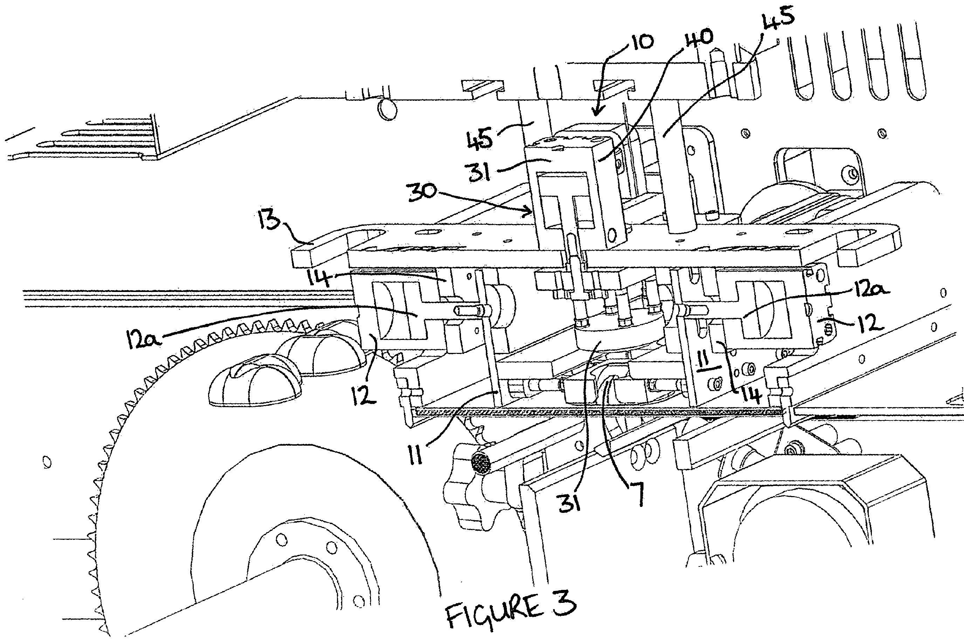

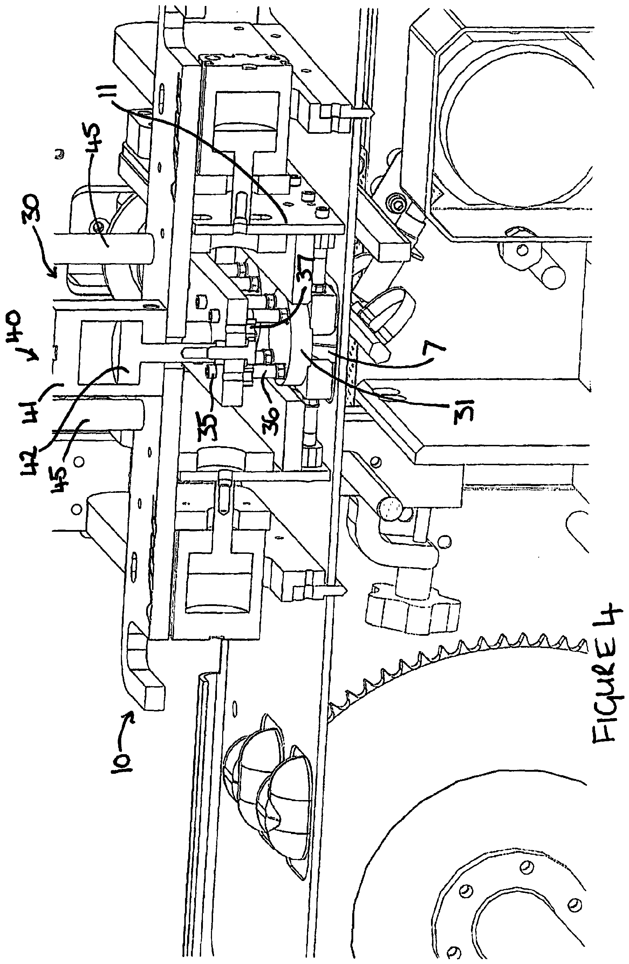

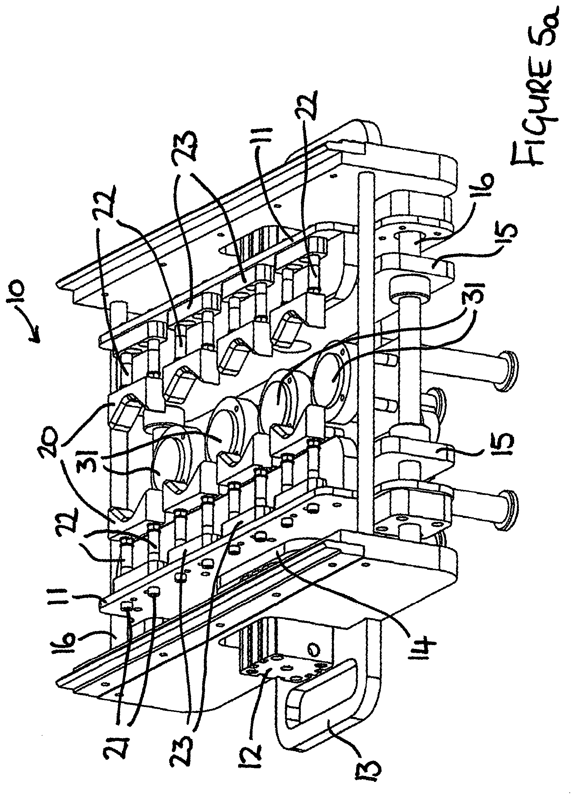

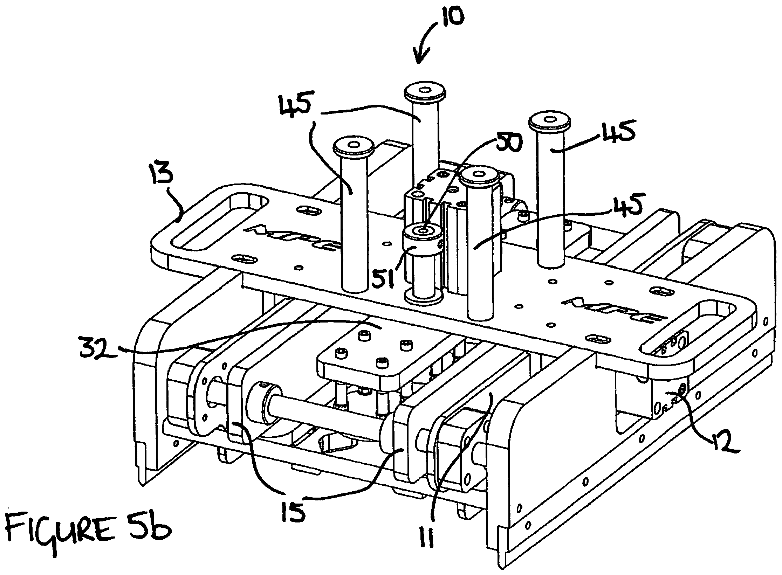

Referring also now to Figures 3 to 5b, which illustrate the vegetable securing mechanism 10 of the apparatus 1. The mechanism secures the potato half 7 in two planes, that is in the plane lying parallel to the surface of the conveyor plate 3 and in the plane perpendicular thereto. The mechanism 10 comprises two spaced apart side plates 11, each mounted slidably on shafts 16 which also pass though aligned apertures in spaced apart shaft support plates 15. Each shaft support plate 15 is attached to the underside of a top plate 13. Each side plate 11 mounts one half of the components which together restrain the potato half in the plane parallel with the convertor plates 3. The aforementioned components include a jaw 20 mounted on two sprung pins 21 which provide for the jaw 20 to move towards and away from the side plate 11. The pin 21 passes through an aperture in the plate 11 and is fixed to the jaw 20. A spring 22 is mounted about the pin 21 and engages a face of the jaw 20 and a collar 23 which is also mounted about the pin 21. As will be appreciated, as the side plates 11 move inward towards the potato half, the jaws 20 to each side of the potato half come into contact therewith. The jaws 20 can move towards a respective one of the side plates 11 against the restoring force of the springs 22.

The vegetable securing mechanism 10 includes plates 14 extending downwardly from the top plate. Each plate 14 mounts an actuator 12, which in the present embodiment is in the form of a pneumatic piston and cylinder. The piston thereof 12a is attached to adjacent the side plate 11. Extension of the actuator 12 moves the side plate 11 on the shafts 16 towards the shaft support plates 15. The downwardly extending plates 14 also provide end stops of the side plates 11, limiting the range of sliding motion of the side plates 11 on the shafts 16.

The vegetable securing mechanism 10 includes four posts 45 which are attached to a plate 17a of a lifting mechanism 17. The lifting mechanism 17 includes an actuator 17b and four posts 17c which are fixed at one end to a main body of the apparatus. The plate 17a includes apertures aligned with the posts 17c, so that the actuator 17b may cause the plate 17a to slide up and down on the posts 17c with respect to the conveyor 2.

The mechanism 10 includes a piston assembly 30, slidably mounted in the top plate 13. The piston assembly 30 comprises a plurality of piston heads 31, each for engaging a potato half. Each piston head 31 is attached to a mounting plate 32 so that the piston head 31 may move axially towards and away from the mounting plate 32. In this embodiment the mounting plate 32 is common to each of the piston heads 31, the piston heads 31 being attached to the mounting plate 32 in a similar manner to the mounting of the jaws 20 to the side plates 11. Each piston head 31 has four pins 35 are attached thereto. These pins pass through apertures the mounting plate 32. A spring 36 and collar 37 is situated about each of the pins 35. Hence, an upward force on any one of the piston heads 31 causes the springs 36 to be compressed, thereby exerting a reaction force on the potato half 7, holding the same in place on the plate 3.

The piston 30 assembly includes components which permit the all the piston heads 31 to be raised and lowered with respect to the conveyor 2. The piston assembly includes a pneumatic actuator 40, which is in the form of a piston rod 42 and cylinder 41. The cylinder 41 is mounted on the top plate 13 with the piston rod 42 extending through the top plate 13 and attaching to the mounting plate 32. Extension and retraction of the actuator 40 moves the mounting plate 32 and those components mounted thereon towards and away from the conveyor 2. The piston assembly 30 includes two sliding rods 50 extending through respective openings in the top plate 13 and being attached to the mounting plate 32. Each rod 50 is includes an end stop 51 of larger diameter than the said rod 50, the end stop 51 limiting the extent of movement of the mounting plate 32 away from the top plate 13 and also securing the mounting plate 32 against forces that may act to rotate the mounting plate 32 about the axis of the actuator 40.

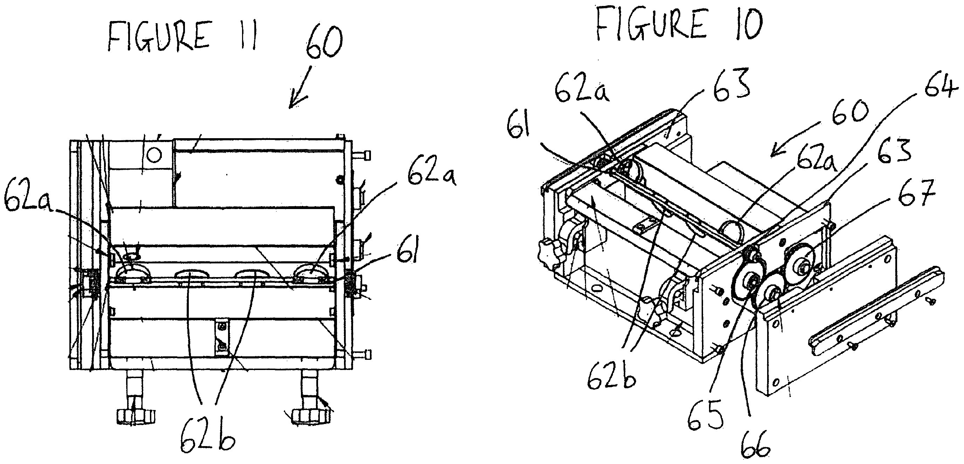

Figures 10 and 11 illustrate the knife assembly 60 which removes the cores from the potato halves. The knife assembly 60 comprises a shaft 61 to which four knives are attached. The four knives are attached to the shaft 61 in two pairs: an outer pair of knives 62a and an inner pair of knives 62b. The two inner pairs of knives 62a are spaced apart radially on the shaft with respect to the the outer pairs of knives 62b. By spacing the the knives apart in this manner, the knives of only one pair engage potato halves at any one time. In the illustrated embodiment, as the shaft 61 rotates, first the outer knives 62a engage potato halves and as the shaft continues to rotate the knife cuts a core of potato from the potato half. As the outer pair of knives complete coring of potato halves the inner pair of knives 62b engage respective potato halves. In the illustrated embodiment the radial spacing of the inner pair of knives with respect to the outer pair is somewhat less than 180 degrees.

The shaft 61 is mounted in suitable bearings or bushes which are themselves mounted in side plates 63. The shaft 61 is driven by a set of gears comprising a gear wheel 64 attached directly to the shaft 61 and a plurality of meshing gear wheels 65, 66 and 67. By utilising gear wheels the rotation of the shaft 61 can be timed to coincide with the movement of other parts of the apparatus. This could also be achieved with a drive system using chains or toothed belts.

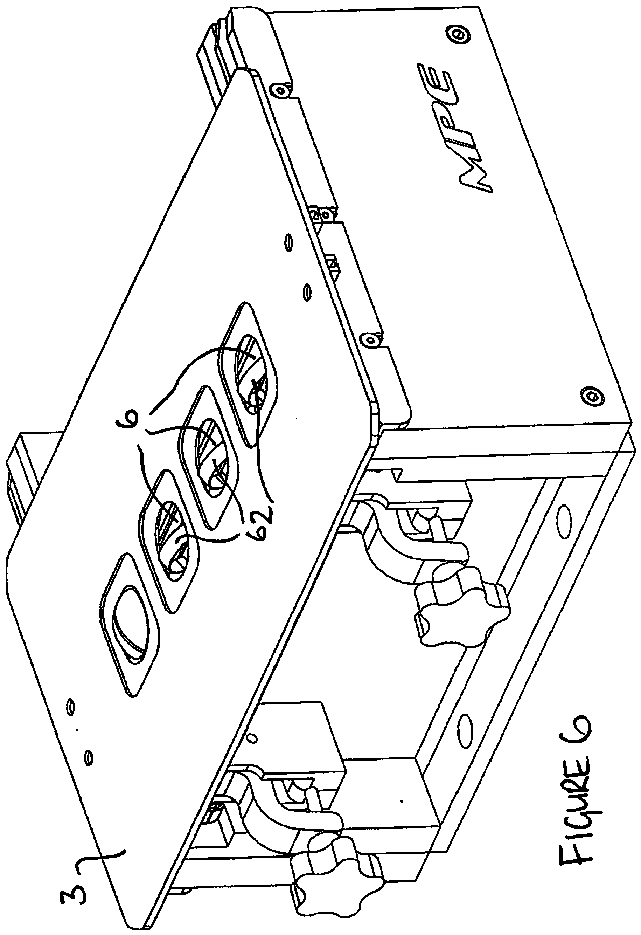

Radial spacing of the knives on the shaft 61 is not essential and Figure 6 illustrates an embodiment where the knives 62 are aligned radially on the shaft 61.

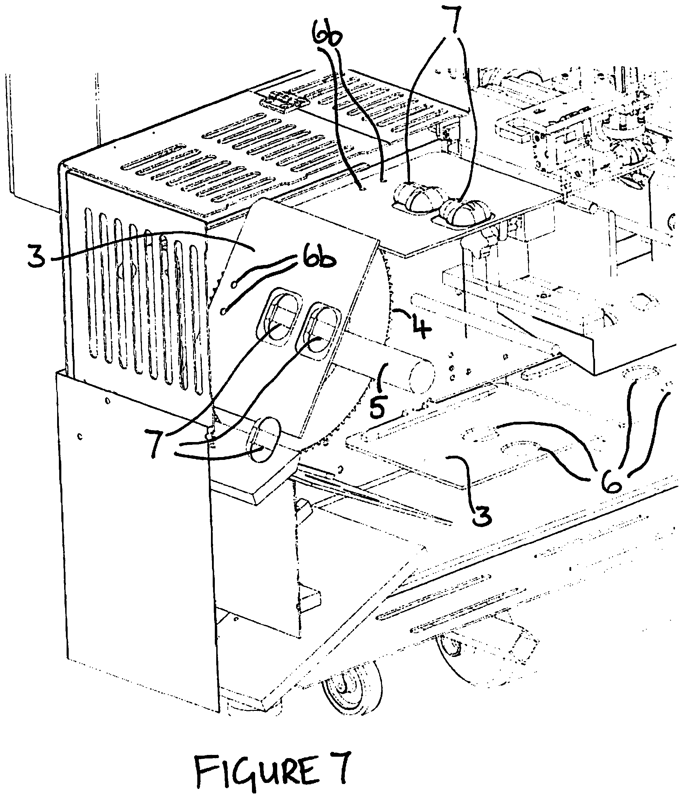

Figures 6 to 9 illustrate the plates 3 of the conveyor 2 and a part of the operation of the apparatus. Figure 6 shows the plate 3, held stationary, with the knives 62 in the process of removing the core from a potato half. Three of the openings 6 are shown without a potato half being present in order to illustrate the knives in relation to the plate 3 and openings 6.

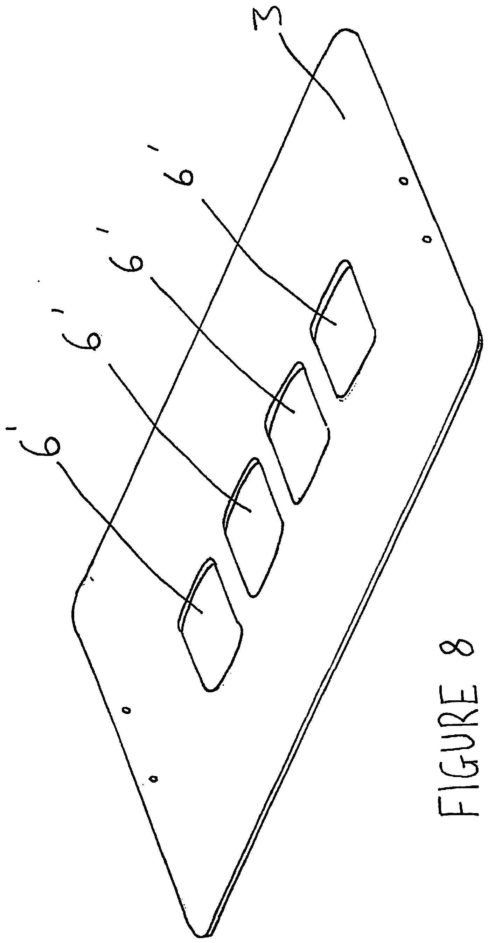

The plates 3 shown in Figures 2, 6 and 9 all have the openings 6 situated in a recess 6a, whereas in Figure 8 the opening 6' extends through the full thickness of the plate 3'. The purpose of positioning each opening 6 in recess 6a is to bring the potato half closer to the axis of the shaft 61 and hence to allow a greater part of the blades 62 to engage with the potato half. Potato halves used in the coring process are usually in one of two weight ranges, 60-90 grammes or 80-120 grammes. For those in the range 60-90 grammes it is desirable to remove approximately 10 grammes. For those in the range 80-120 grammes it is desirable to remove approximately 23 grammes. It is advantageous that knives of different dimension are used for the different sizes of potato, so that cores of similar proportion may be removed from the different sizes of potato. For the smaller size range this means a knife blade having a smaller radius. However, reducing the radius of the knife blade decreases the distance between the shaft 61 and the part of the blade furthest from the shaft. Hence, it is desirable to bring the potato half closer to the shaft. The solution proposed herein is to reduce the thickness of the plate 3 in the region around the opening 6.

The mode of operation will now be described. The conveyor 2 is driven by a servo operated motor which moves the conveyor by a prescribed distance (which corresponds to the dimension of one of the plates 3 in the longitudinal direction of the conveyor plea the width of the gap between one plate 3 and another), and then halts the conveyor for a prescribed period of time. The prescribed period of time is a period sufficiently long for: potato halves 7 to be placed over the openings 6 accurately, either manually or by a machine; the vegetable securing mechanism 10 to secure the potato halves 7 in place; the knives 62 to cut the cores from the potato halves and to return to their rest position; and for the vegetable securing mechanism to move back to a position to allow the potato halves 7 on the next plate 3 to move into position thereunder.

From a retracted position shown, the actuator 17b lowers the vegetable securing mechanism 10 by a predetermined distance to a position where the underside of jaws 20 are a small distance above the plate 3 (it is desirable that they do not touch the upper surface of plate 3).

The actuators 12 are operated to move the side plates 11 towards each other. As they do so, the jaws 20 engage the edges of the potato halves 7. The force exerted by the springs 22 causes each potato half 7 to become substantially centralised over the opening 6. The actuator 41 is the extended so that each piston heads 31 come into contact with the upper surface of a potato half 7. The extension of actuator 41 commences momentarily after the extension of actuators 12, so that centralisation of the potato halves 7 occurs prior to the full force of the piston head 31 being exerted on any one potato half 7.

The next step is for the shaft 61 mounting the knives 62 to rotate. The knives pass through the openings 6, engaging the potato halves 7 and removing the cores therefrom. The shaft 61 continues to rotate until it reaches its rest position where all the knives attached to a shaft 61 are sufficiently beneath the plate 3, that the conveyor 2 may be moved along by the predetermined distance. The process described above is then repeated.

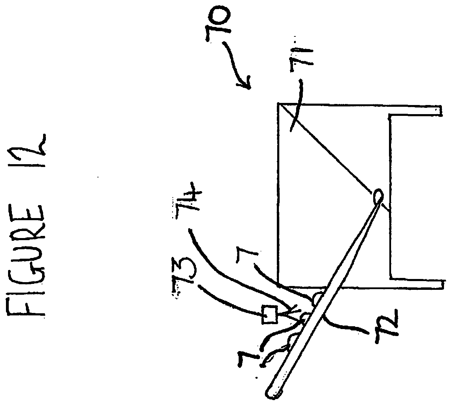

As can be seen from Figure 1, when the plate 2 carrying potato halves which have had their cores removed reaches the end of the conveyor 2 the plate 3 turns through 180 degrees and the the potato halves 7 fall off under gravity. The potato halves may be collected by another conveyor for a subsequent process or they may be collected in a suitable receptacle. In one example, the cored potato halves 7 may be forwarded to an apparatus that applies a coating to the potato halves, for example an oil coating. Such an apparatus is illustrated in Figure 12. The apparatus 70 of Figure 12 comprises a hopper 71, a conveyor 72 and a spray head 73, which applies a coating such as a cooking oil to cored potato halves 7.

By removing the core from the potato half using the present apparatus, it ceases to be necessary to cook the potato prior to coring. Not only does the removal of this process save the cost associated therewith, but it has been found that the subsequent cooking process can be accomplished using less cooking oil. In fact, the amount of cooking oil may be reduced such that the fat content of the resulting potato half is some 4% less than the fat content of the equivalent potato half made according to the methods of the prior art.

The apparatus of the invention provides for the efficient removal of parts from vegetable pieces. In the description the parts are removed from potato halves. However, the apparatus may have utility in removing parts from different vegetables. The term, "vegetable piece" may refer to whole vegetables or parts of vegetables.

## Claims

1. Apparatus (1) for removing a part from a vegetable piece (7), the apparatus comprising:
a conveyor (2) including a plurality of vegetable support elements (3), each vegetable support element comprising at least one opening (6) therein;
a vegetable securing mechanism (10) situated above the conveyor (2) and including means to secure a vegetable piece (7) in position over the at least one opening (6) such that the centre of the at least one opening and the centre of the vegetable piece are substantially aligned; and
a cutting mechanism (60) including at least one cutting blade (62) aligned with the at least one opening (6) in one of the plurality of vegetable support elements (3), and configured to pass through the at least one opening (6) from below the vegetable support elements (3);
a drive means driving the vegetable support elements (3) of the conveyor (2) towards the vegetable securing and cutting mechanisms (10, 60);
timing means configured to advance the conveyor (2) in steps of pre-defined distances and to halt forward movement of the conveyor (2) for predetermined periods of time with the centre of the opening (6) of the vegetable support element (3) substantially aligned with a central axis of the vegetable securing mechanism (10), and to control the actuation of the vegetable securing mechanism (10) and cutting mechanism (60) to:
i) secure a vegetable piece (7) in position on the vegetable support element (3);
ii) activate the cutting mechanism (60) to move through a cutting cycle;
iii) to release the vegetable piece (7) from the vegetable securing mechanism (10); and
iv) move the conveyor (2) through another step.

2. Apparatus according to Claim 1, wherein the vegetable support element (3) comprises a plate, the or each opening (6) extending through the plate; or
wherein the vegetable support element (3) comprises a plate, the or each opening (6) extending through the plate, and wherein the or each plate has a thickness and the or each opening (6) is situated in a recess (6a) in the plate where the thickness thereof is reduced relative to the thickness of the plate adjacent to the recess (6a).

3. Apparatus according to any preceding claim, wherein the vegetable securing means (10) is mounted on a frame and wherein the vegetable securing means (10) is movable relative to the frame towards and away from the conveyor (2) in a plane substantially perpendicular to the surface of the conveyor; or
wherein the vegetable securing means (10) is mounted on a frame and wherein the vegetable securing means (10) is movable relative to the frame towards and away from the conveyor (2) in a plane substantially perpendicular to the surface of the conveyor, and wherein the frame mounts an actuator (17b), the actuator (17b) attached to the vegetable securing means (10), extension and retraction of the actuator (17b) moving the vegetable securing means (10) towards and away from the frame.

4. Apparatus according to any preceding claim, wherein the vegetable securing mechanism (10) includes first vegetable piece engaging members (20) moveable in a plane parallel to the surface of the conveyor; or
wherein the vegetable securing mechanism (10) includes first vegetable piece engaging members (20), and the vegetable piece securing mechanism (10) includes at least one actuator (12) configured to move the first vegetable piece engaging members (20) in the plane parallel to the surface of the conveyor.

5. Apparatus according to Claim 4, wherein the first vegetable piece engaging members (20) are mounted on a first support (11) and the actuator (12) is configured to move the first support (11) in the plane parallel to the surface of the conveyor; or
wherein the first vegetable piece engaging members (20) are mounted on a first support (11) movably between extended and retracted positions and are biased to the extended position (by at least one resilient element (22)), and the actuator (12) is configured to move the first support (11) in the plane parallel to the surface of the conveyor.

6. Apparatus according to any preceding claim, wherein the vegetable securing mechanism (10) includes at least one second vegetable piece engaging member (31) moveable towards and away from the conveyor (3) in a direction substantially perpendicular to the surface of the conveyor; or
wherein the vegetable securing mechanism (10) includes at least one second vegetable piece engaging member (31) and at least one actuator (40) configured to move the at least one second vegetable piece engaging member (31) in the plane substantially perpendicular to the surface of the conveyor.

7. Apparatus according to any preceding claim 6, wherein the at least one second vegetable piece engaging member (31) is mounted on a second support (32), which second support is attached to the frame; or
wherein the second vegetable piece engaging members (31) are mounted on a second support (32) movably between extended and retracted positions and are biased to the extended position (by at least one resilient element (36)).

8. Apparatus according to any preceding claim, wherein the cutting mechanism (60) includes a shaft (61) and the at least one cutting blade (62) is mounted on the shaft (61); or
wherein the cutting mechanism (60) includes a shaft (61) and a plurality of cutting blades (62), and wherein the cutting blades (62) are mounted on the shaft (61) and aligned on the same radial axis of the shaft or are mounted on the shaft (61) on different radial axes of the shaft (61).

9. Apparatus according to any preceding claim, wherein the drive means includes elements (5) that may be synchronised with one another; or
wherein the drive means includes elements (5) that may be synchronised with one another, and wherein the elements (5) include toothed gear wheels, cogs, chains, toothed pulley wheels and toothed belts.

10. Apparatus according to Claim 9, wherein the drive means includes a motor; or
wherein the drive means includes a motor and the motor is selected from the group comprising: an electric motor, a stepper motor, and a servo operated motor.

11. Apparatus according to any preceding claim, wherein the timing means is electronic, mechanical or electro-mechanical.

12. Apparatus according to Claim 11, wherein the timing means includes at least one position sensor associated with at least one of the conveyor (3), the vegetable securing mechanism (10), the cutting mechanism (60) and the drive means and wherein the timing means is configured to receive signals from the position sensor; or
wherein the timing means includes at least one position sensor associated with each of the conveyor (3), the vegetable securing mechanism (10), the cutting mechanism (60) and the drive means and wherein the timing means is configured to receive signals from the position sensor.

13. A method of removing a part from a vegetable piece (7) using an apparatus (1) as claimed in any of Claims 1 to 12 and comprising the steps of:
i) holding the conveyor (3) stationary for a period;
ii) placing at least one vegetable piece (7) on the support element (3), the or each vegetable piece placed over a respective opening (6) in the support element (3);
iii) advancing the conveyor (3) such that the or each opening (6) of the support element (3) with vegetable pieces (7) thereon is situated such that the centre of each opening lies on a substantially common axis with the vegetable piece securing mechanism (10) and the cutting mechanism (60) and halting the conveyor (3) and holding said conveyor stationary for the period of time;
iv) activating the vegetable piece securing mechanism (10) to secure the or each vegetable piece (7) in a substantially centred position over the opening (6);
v) activating the cutting mechanism (60) to cut a part of the vegetable piece therefrom;
vi) releasing the vegetable piece securing mechanism (10);
vii) in the period where the conveyor (3) is held stationary, repeating step ii for the next support element;
vii) repeating steps iii to vii.

14. A method according to Claim 13, wherein the apparatus (1) is an apparatus according to Claims 4 and 6 and wherein one of the first and second vegetable piece engaging members (20, 31) engages the vegetable piece (7) in advance of the other.

15. A method according to Claim 13 or 14, comprising the further step of coating the vegetable piece resulting from the method with a fluid.

## Patentansprüche

1. Vorrichtung (1) zur Entfernung eines Teils aus einem Gemüsestück (7), wobei die Vorrichtung Folgendes umfasst:
ein Förderband (2), das mehrere Gemüsetrageelemente (3) beinhaltet, wobei jedes Gemüsetrageelement mindestens eine Öffnung (6) darin umfasst;
einen Gemüsesicherungsmechanismus (10), der sich über dem Förderband (2) befindet und ein Mittel zum Sichern eines Gemüsestücks (7) in Position über der mindestens einen Öffnung (6) beinhaltet, so dass die Mitte der mindestens einen Öffnung und die Mitte des Gemüsestücks im Wesentlichen ausgerichtet sind; und
einen Schneidmechanismus (60), der mindestens ein Schneidmesser (62) beinhaltet, das auf die mindestens eine Öffnung (6) in einem der mehreren Gemüsetrageelemente (3) ausgerichtet ist und dazu konfiguriert ist, durch die mindestens eine Öffnung (6) von unterhalb der Gemüsetrageelemente (3) hindurchzutreten;
ein Antriebsmittel, das die Gemüsetrageelemente (3) des Förderbands (2) zu dem Gemüsesicherungsmechanismus und dem Schneidmechanismus (10, 60) hin antreibt;
ein Zeitsteuerungsmittel, das dazu konfiguriert ist, das Förderband (2) in Stufen mit vordefinierten Entfernungen voranzutreiben und eine Vorwärtsbewegung des Förderbands (2) für vorherbestimmte Zeiträume anzuhalten, wobei die Mitte der Öffnung (6) des Gemüsetrageelements (3) im Wesentlichen auf eine Mittelachse des Gemüsesicherungsmechanismus (10) ausgerichtet ist, und die Betätigung des Gemüsesicherungsmechanismus (10) und des Schneidmechanismus (60) zu steuern, um:
i) ein Gemüsestück (7) in Position auf dem Gemüsetrageelement (3) zu sichern;
ii) den Schneidmechanismus (60) zu aktivieren, um sich durch einen Schneidzyklus zu bewegen;
iii) das Gemüsestück (7) aus dem Gemüsesicherungsmechanismus (10) freizugeben und
iv) das Förderband (2) durch eine andere Stufe zu bewegen.

2. Vorrichtung nach Anspruch 1, wobei das Gemüsetrageelement (3) eine Platte umfasst, wobei die oder jede Öffnung (6) sich durch die Platte erstreckt; oder
wobei das Gemüsetrageelement (3) eine Platte umfasst, wobei die oder jede Öffnung (6) sich durch die Platte erstreckt und wobei die oder jede Platte eine Dicke aufweist und die oder jede Öffnung (6) sich in einer Aussparung (6a) in der Platte befindet, wo die Dicke davon im Verhältnis zu der Dicke der Platte benachbart zu der Aussparung (6a) verringert ist.

3. Vorrichtung nach einem vorhergehenden Anspruch, wobei das Gemüsesicherungsmittel (10) an einem Rahmen montiert ist und wobei das Gemüsesicherungsmittel (10) im Verhältnis zu dem Rahmen zu dem Förderband (2) hin und von diesem weg in einer Ebene, die im Wesentlichen senkrecht zu der Oberfläche des Förderbands ist, bewegbar ist; oder
wobei das Gemüsesicherungsmittel (10) an einem Rahmen montiert ist und wobei das Gemüsesicherungsmittel (10) im Verhältnis zu dem Rahmen zu dem Förderband (2) hin und von diesem weg in einer Ebene, die im Wesentlichen senkrecht zu der Oberfläche des Förderbands ist, bewegbar ist, und wobei der Rahmen ein Betätigungselement (17b) montiert, wobei das Betätigungselement (17b) an dem Gemüsesicherungsmittel (10) angebracht ist, wobei ein Ausfahren und ein Einfahren des Betätigungselements (17b) das Gemüsesicherungsmittel (10) zu dem Rahmen hin und von diesem weg bewegt.

4. Vorrichtung nach einem vorhergehenden Anspruch, wobei der Gemüsesicherungsmechanismus (10) erste Gemüsestückeingriffselemente (20) beinhaltet, die in einer Ebene bewegbar sind, die parallel zu der Oberfläche des Förderbands ist; oder
wobei der Gemüsesicherungsmechanismus (10) erste Gemüsestückeingriffselemente (20) beinhaltet und der Gemüsestücksicherungsmechanismus (10) mindestens ein Betätigungselement (12) beinhaltet, das dazu konfiguriert ist, die ersten Gemüsestückeingriffselemente (20) in der Ebene zu bewegen, die parallel zu der Oberfläche des Förderbands ist.

5. Vorrichtung nach Anspruch 4, wobei die ersten Gemüsestückeingriffselemente (20) an einem ersten Träger (11) montiert sind und das Betätigungselement (12) dazu konfiguriert ist, den ersten Träger (11) in der Ebene zu bewegen, die parallel zu der Oberfläche des Förderbands ist; oder
wobei die ersten Gemüsestückeingriffselemente (20) an einem ersten Träger (11) zwischen einer ausgefahrenen und einer eingefahrenen Position bewegbar montiert sind und zu der ausgefahrenen Position vorgespannt sind (durch mindestens ein federndes Element (22)) und das Betätigungselement (12) dazu konfiguriert ist, den ersten Träger (11) in der Ebene zu bewegen, die parallel zu der Oberfläche des Förderbands ist.

6. Vorrichtung nach einem vorhergehenden Anspruch, wobei der Gemüsesicherungsmechanismus (10) mindestens ein zweites Gemüsestückeingriffselement (31) beinhaltet, das zu dem Förderband (3) hin und von diesem weg in einer Richtung bewegbar ist, die im Wesentlichen senkrecht zu der Oberfläche des Förderbands ist; oder
wobei der Gemüsesicherungsmechanismus (10) mindestens ein zweites Gemüsestückeingriffselement (31) und mindestens ein Betätigungselement (40) beinhaltet, das dazu konfiguriert ist, das mindestens eine zweite Gemüsestückeingriffselement (31) in der Ebene zu bewegen, die im Wesentlichen senkrecht zu der Oberfläche des Förderbands ist.

7. Vorrichtung nach einem vorhergehenden Anspruch 6, wobei das mindestens eine zweite Gemüsestückeingriffselement (31) an einem zweiten Träger (32) montiert ist, wobei dieser zweite Träger an dem Rahmen angebracht ist; oder
wobei die zweiten Gemüsestückeingriffselemente (31) an einem zweiten Träger (32) zwischen einer ausgefahrenen und einer eingefahrenen Position bewegbar montiert sind und zu der ausgefahrenen Position vorgespannt sind (durch mindestens ein federndes Element (36)).

8. Vorrichtung nach einem vorhergehenden Anspruch, wobei der Schneidmechanismus (60) eine Welle (61) beinhaltet und das mindestens eine Schneidmesser (62) an der Welle (61) montiert ist; oder
wobei der Schneidmechanismus (60) eine Welle (61) und mehrere Schneidmesser (62) beinhaltet und wobei die Schneidmesser (62) an der Welle (61) montiert sind und auf derselben Radialachse der Welle ausgerichtet sind oder an der Welle (61) auf unterschiedlichen Radialachsen der Welle (61) montiert sind.

9. Vorrichtung nach einem vorhergehenden Anspruch, wobei das Antriebsmittel Elemente (5) beinhaltet, die miteinander synchronisiert sein können; oder
wobei das Antriebsmittel Elemente (5) beinhaltet, die miteinander synchronisiert sein können, und wobei die Elemente (5) Zahnräder, Kammräder, Ketten, Zahnriemenscheiben und Zahnriemen beinhalten.

10. Vorrichtung nach Anspruch 9, wobei das Antriebsmittel einen Motor beinhaltet; oder
wobei das Antriebsmittel einen Motor beinhaltet und der Motor aus der Gruppe umfassend: einen Elektromotor, einen Schrittmotor und einen Servomotor ausgewählt ist.

11. Vorrichtung nach einem vorhergehenden Anspruch, wobei das Zeitsteuerungsmittel elektronisch, mechanisch oder elektromechanisch ist.

12. Vorrichtung nach Anspruch 11, wobei das Zeitsteuerungsmittel mindestens einen Positionssensor beinhaltet, der mit mindestens einem von dem Förderband (3), dem Gemüsesicherungsmechanismus (10), dem Schneidmechanismus (60) und dem Antriebsmittel assoziiert ist, und wobei das Zeitsteuerungsmittel dazu konfiguriert ist, Signale von dem Positionssensor zu empfangen; oder
wobei das Zeitsteuerungsmittel mindestens einen Positionssensor beinhaltet, der mit jedem von dem Förderband (3), dem Gemüsesicherungsmechanismus (10), dem Schneidmechanismus (60) und dem Antriebsmittel assoziiert ist, und wobei das Zeitsteuerungsmittel dazu konfiguriert ist, Signale von dem Positionssensor zu empfangen.

13. Verfahren zur Entfernung eines Teils aus einem Gemüsestück (7), das eine Vorrichtung (1) nach einem der Ansprüche 1 bis 12 verwendet und die folgenden Schritte umfasst:
i) Halten des Förderbands (3) stationär für eine Zeitspanne;
ii) Platzieren mindestens eines Gemüsestücks (7) auf dem Trageelement (3), wobei das oder jedes Gemüsestück über einer jeweiligen Öffnung (6) in dem Trageelement (3) platziert wird;
iii) Vorantreiben des Förderbands (3), so dass die oder jede Öffnung (6) des Trageelements (3) mit Gemüsestücken (7) darauf derart angeordnet ist, dass die Mitte jeder Öffnung auf einer im Wesentlichen gemeinsamen Achse mit dem Gemüsestücksicherungsmechanismus (10) und dem Schneidmechanismus (60) liegt, und Anhalten des Förderbands (3) und Halten des Förderbands stationär für den Zeitraum;
iv) Aktivieren des Gemüsestücksicherungsmechanismus (10), um das oder jedes Gemüsestück (7) in einer im Wesentlichen zentrierten Position über der Öffnung (6) zu sichern;
v) Aktivieren des Schneidmechanismus (60), um einen Teil des Gemüsestücks daraus zu schneiden;
vi) Freigeben des Gemüsestücksicherungsmechanismus (10);
vii) in der Zeitspanne, in der das Förderband (3) stationär gehalten wird, Wiederholen von Schritt ii für das nächste Trageelement;
viii)Wiederholen der Schritte iii bis vii.

14. Verfahren nach Anspruch 13, wobei die Vorrichtung (1) eine Vorrichtung nach den Ansprüchen 4 und 6 ist und wobei eines von den ersten und den zweiten Gemüsestückeingriffselementen (20, 31) das Gemüsestück (7) vor dem anderen in Eingriff nimmt.

15. Verfahren nach Anspruch 13 oder 14, das den weiteren Schritt eines Beschichtens des aus dem Verfahren resultierenden Gemüsestücks mit einer Flüssigkeit umfasst.

## Revendications

1. Appareil (1) servant à extraire une partie d'un légume (7), l'appareil comportant :
un dispositif de transport (2) comprenant une pluralité d'éléments de support de légumes (3), chaque élément de support de légumes comportant au moins une ouverture (6) dans celuici ;
un mécanisme de fixation de légumes (10) situé audessus du dispositif de transport (2) et comprenant un moyen servant à fixer un légume (7) en position sur ladite au moins une ouverture (6) de telle sorte que le centre de ladite au moins une ouverture et le centre du légume sont sensiblement alignés ; et
un mécanisme de coupe (60) comprenant au moins une lame de coupe (62) alignée sur ladite au moins une ouverture (6) dans l'un de la pluralité d'éléments de support de légumes (3), et configuré pour passer au travers de ladite au moins une ouverture (6) en passant par endessous des éléments de support de légumes (3) ;
un moyen d'entraînement servant à entraîner les éléments de support de légumes (3) du dispositif de transport (2) vers les mécanismes de fixation et de coupe de légumes (10, 60) ;
un moyen de temporisation configuré pour faire avancer le dispositif de transport (2) par étapes de distances prédéfinies et pour interrompre le mouvement vers l'avant du dispositif de transport (2) pendant des périodes de temps prédéterminées, le centre de l'ouverture (6) de l'élément de support de légumes (3) étant sensiblement aligné sur un axe central du mécanisme de fixation de légumes (10), et pour commander l'actionnement du mécanisme de fixation de légumes (10) et du mécanisme de coupe (60) pour :
i) fixer un légume (7) en position sur l'élément de support de légumes (3) ;
ii) actionner le mécanisme de coupe (60) pour avancer dans un cycle de coupe ;
iii) libérer le légume (7) du mécanisme de fixation de légumes (10) ; et
iv) faire avancer le dispositif de transport (2) vers une autre étape.

2. Appareil selon la revendication 1, dans lequel l'élément de support de légumes (3) comporte une plaque, la ou chaque ouverture (6) s'étendant au travers de la plaque ; ou
dans lequel l'élément de support de légumes (3) comporte une plaque, la ou chaque ouverture (6) s'étendant au travers de la plaque, et dans lequel la ou chaque ouverture a une épaisseur et la ou chaque ouverture (6) est située dans un évidement (6a) dans la plaque où son épaisseur est réduite par rapport à l'épaisseur de la plaque adjacente à l'évidement (6a).

3. Appareil selon l'une quelconque des revendications précédentes, dans lequel le moyen de fixation de légumes (10) est monté sur un cadre et dans lequel le moyen de fixation de légumes (10) est mobile par rapport au cadre en direction et en provenance du dispositif de transport (2) dans un plan sensiblement perpendiculaire par rapport à la surface du dispositif de transport ; ou
dans lequel le moyen de fixation de légumes (10) est monté sur un cadre et dans lequel le moyen de fixation de légumes (10) est mobile par rapport au cadre en direction et en provenance du dispositif de transport (2) dans un plan sensiblement perpendiculaire par rapport à la surface du dispositif de transport, et dans lequel le cadre forme une monture pour un actionneur (17b), l'actionneur (17b) étant attaché au moyen de fixation de légumes (10), l'extension et la rétraction de l'actionneur (17b) servant à déplacer le moyen de fixation de légumes (10) en direction et en provenance du cadre.

4. Appareil selon l'une quelconque des revendications précédentes, dans lequel le mécanisme de fixation de légumes (10) comprend des premiers éléments de mise en prise de légumes (20) mobiles dans un plan parallèle par rapport à la surface du dispositif de transport ; ou
dans lequel le mécanisme de fixation de légumes (10) comprend des premiers éléments de mise en prise de légumes (20), et le mécanisme de fixation de légumes (10) comprend au moins un actionneur (12) configuré à des fins de déplacement des premiers éléments de mise en prise de légumes (20) dans le plan parallèle par rapport à la surface du dispositif de transport.

5. Appareil selon la revendication 4, dans lequel les premiers éléments de mise en prise de légumes (20) sont montés sur un premier support (11) et l'actionneur (12) est configuré à des fins de déplacement du premier support (11) dans le plan parallèle par rapport à la surface du dispositif de transport ; ou
dans lequel les premiers éléments de mise en prise de légumes (20) sont montés sur un premier support (11) de manière mobile entre des positions étendue et rétractée et sont sollicités jusque sur la position étendue (par au moins un élément élastique (22)), et l'actionneur (12) est configuré à des fins de déplacement du premier support (11) dans le plan parallèle par rapport à la surface du dispositif de transport.

6. Appareil selon l'une quelconque des revendications précédentes, dans lequel le mécanisme de fixation de légumes (10) comprend au moins un deuxième élément de mise en prise de légumes (31) mobile à destination et en provenance du dispositif de transport (3) dans une direction sensiblement perpendiculaire par rapport à la surface du dispositif de transport ; ou
dans lequel le mécanisme de fixation de légumes (10) comprend au moins un deuxième élément de mise en prise de légumes (31) et au moins un actionneur (40) configuré à des fins de déplacement dudit au moins un deuxième élément de mise en prise de légumes (31) dans un plan sensiblement perpendiculaire par rapport à la surface du dispositif de transport.

7. Appareil selon la revendication 6, dans lequel ledit au moins un deuxième élément de mise en prise de légumes (31) est monté sur un deuxième support (32), deuxième support qui est attaché au cadre ; ou
dans lequel les deuxièmes éléments de mise en prise de légumes (31) sont montés sur un deuxième support (32) de manière mobile entre des positions étendue et rétractée et sont sollicités jusque sur la position étendue (par au moins un élément élastique (36)).

8. Appareil selon l'une quelconque des revendications précédentes, dans lequel le mécanisme de coupe (60) comprend un arbre (61) et ladite au moins une lame de coupe (62) est montée sur l'arbre (61) ; ou
dans lequel le mécanisme de coupe (60) comprend un arbre (61) et une pluralité de lames de coupe (62), et dans lequel les lames de coupe (62) sont montées sur l'arbre (61) et alignées sur le même axe radial de l'arbre ou sont montées sur l'arbre (61) sur différents axes radiaux de l'arbre (61).

9. Appareil selon l'une quelconque des revendications précédentes, dans lequel le moyen d'entraînement comprend des éléments (5) qui peuvent être synchronisés les uns par rapport aux autres ; ou
dans lequel le moyen d'entraînement comprend des éléments (5) qui peuvent être synchronisés les uns par rapport aux autres, et dans lequel les éléments (5) comprennent des roues dentées, des dents, des chaînes, des réas dentés et des courroies dentées.

10. Appareil selon la revendication 9, dans lequel le moyen d'entraînement comprend un moteur ; ou
dans lequel le moyen d'entraînement comprend un moteur et le moteur est sélectionné dans le groupe comportant : un moteur électrique, un moteur pas à pas, et un moteur à servocommande.

11. Appareil selon l'une quelconque des revendications précédentes, dans lequel le moyen de temporisation est électronique, mécanique ou électromécanique.

12. Appareil selon la revendication 11, dans lequel le moyen de temporisation comprend au moins un capteur de position associé à au moins l'un parmi le dispositif de transport (3), le mécanisme de fixation de légumes (10), le mécanisme de coupe (60) et le moyen d'entraînement et dans lequel le moyen de temporisation est configuré pour recevoir des signaux en provenance du capteur de position ; ou
dans lequel le moyen de temporisation comprend au moins un capteur de position associé à chacun parmi le dispositif de transport (3), le mécanisme de fixation de légumes (10), le mécanisme de coupe (60) et le moyen d'entraînement et dans lequel le moyen de temporisation est configuré pour recevoir des signaux en provenance du capteur de position.

13. Procédé servant à extraire une partie d'un légume (7) en utilisant un appareil (1) selon l'une quelconque des revendications 1 à 12 et comportant les étapes consistant à :
i) maintenir le dispositif de transport (3) à l'arrêt pendant une période ;
ii) placer au moins un légume (7) sur l'élément de support (3), le ou chaque légume étant placé sur une ouverture respective (6) de l'élément de support (3) ;
iii) faire avancer le dispositif de transport (3) de telle sorte que la ou chaque ouverture (6) de l'élément de support (3) avec des légumes (7) dessus est située de telle sorte que le centre de chaque ouverture se trouve sur un axe sensiblement commun avec le mécanisme de fixation de légumes (10) et le mécanisme de coupe (60) et interrompre le dispositif de transport (3) et maintenir ledit dispositif de transport à l'arrêt pendant la période de temps ;
iv) activer le mécanisme de fixation de légumes (10) pour fixer le ou chaque légume (7) dans une position sensiblement centrée sur l'ouverture (6) ;
v) activer le mécanisme de coupe (60) pour couper une partie du légume en provenance de celuici ;
vi) libérer le mécanisme de fixation de légumes (10) ;
vii) lors de la période au cours de laquelle le dispositif de transport (3) est maintenu à l'arrêt, répéter l'étape ii pour l'élément de support suivant ;
viii) répéter les étapes iii à vii.

14. Procédé selon la revendication 13, dans lequel l'appareil (1) est un appareil selon la revendication 4 et la revendication 6 et dans lequel l'un parmi les premier et deuxième éléments de mise en prise de légumes (20, 31) met en prise le légume (7) avant l'autre.

15. Procédé selon la revendication 13 ou la revendication 14, comportant l'étape supplémentaire consistant à enrober le légume résultant du procédé au moyen d'un fluide.
